# DEMANDE DE BREVET EUROPEEN

(11) **EP 2 397 962 A1**
(43) Date de publication de la demande: **21.12.2011**
(21) Numéro de dépôt: 11305662.6
(22) Date de dépôt: 31.05.2011
(51) Int. Cl.: G06F 21/20

(54) **Dispositif et procédé de stockage sécurisé de données biométriques**

(30) Priorité: 17.06.2010 FR 1002565
(71) Demandeur: Thales, 92200 Neuilly Sur Seine (FR)
(72) Inventeur: Bettan, Olivier, 78141 VELIZY -VILLACOUBLAY CEDEX (FR); D'Hose, Johan, 78141 VELIZY -VILLACOUBLAY CEDEX (FR)
(74) Mandataire: Blot, Philippe Robert Emile

(57) **Abrégé**

Ce procédé de stockage sécurisé de données biométriques comprenant au moins une image biométrique et une donnée permettant d'identifier un individu appelée nom associée à l'image biométrique, le procédé comportant :
- la formation et la sauvegarde d'un lien entre le nom de l'individu et l'image biométrique,
- la sauvegarde, dans une première base du nom de l'individu
- la sauvegarde, dans une deuxième base de l'image biométrique,

est caractérisé en ce que :
- l'étape de formation et de sauvegarde du lien comprend :
o la fragmentation (50) de l'image biométrique en un ensemble de blocs indexés,
o la création (50) d'un index des blocs propres à permettre la reconstitution de l'image à partir de la connaissance des blocs et de l'index,
o la création (56) d'un lien entre le nom de l'individu et l'index,
o la sauvegarde (58) du lien entre le nom de l'individu et l'index, et

- la sauvegarde, dans une deuxième base de l'image biométrique comprend la sauvegarde (50) des différents blocs indexés dans la deuxième base (16).

## Description

La présente invention concerne un dispositif de stockage sécurisé de données biométriques comprenant au moins une image biométrique et une donnée permettant d'identifier un individu appelée nom associée à l'image biométrique, le procédé comportant :
- la formation et la sauvegarde d'un lien entre le nom de l'individu et l'image biométrique,
- la sauvegarde, dans une première base du nom de l'individu, et
- la sauvegarde, dans une deuxième base de l'image biométrique.

Afin de préserver l'anonymat des individus, la conservation de données biométriques, doit s'effectuer de manière anonyme et sécurisée. Outre le fait de ne pas violer l'intimité des individus, la sécurisation de ces données s'impose pour ne pas créer de faille de sécurité dans les systèmes d'identification mettant en oeuvre ces données biométriques.

Les données biométriques sont des données basées sur des caractéristiques propres à chaque individu et permettant par exemple leur identification. Ces données sont soit des images biométriques, comme des images d'iris, de visages ou d'empreintes digitales, soit des caractéristiques extraites de ces images. Ces caractéristiques sont couramment désignées par le terme anglais « template ». Dans la description qui suit, elles seront systématiquement désignées par image biométrique.

Pour assurer la sécurité, il est connu que le dispositif de stockage comporte deux bases distinctes. Dans une première base sont stockées les données personnelles des individus concernés par les images biométriques. Ces données personnelles sont des données permettant d'identifier un individu. Il s'agit souvent de son nom, mais il peut s'agir également d'autres données comme son numéro de passeport ou son numéro de sécurité sociale. Dans une deuxième base sont stockées les images biométriques elles-mêmes. Un lien est établi entre le nom stocké dans la première base et l'image biométrique correspondante stockée dans la seconde base.

Ce lien est couramment constitué de deux identifiants dont l'un est le produit d'une fonction cryptographique de l'autre. Un premier identifiant est stocké et associé au nom dans la première base alors que le second identifiant est stocké dans la seconde base et associé à l'image biométrique.

Pour récupérer une image biométrique, correspondant à un nom, une interrogation est faite dans la première base pour déterminer le premier identifiant associé au nom. Ce premier identifiant est crypté pour déterminer le second identifiant puis une interrogation est faite de la seconde base pour obtenir l'image biométrique associée au second identifiant.

De manière analogue, pour le stockage d'une nouvelle image biométrique associée à un nouveau nom, les premier et second identifiants sont créés à partir de la fonction cryptographique et stockés respectivement dans la première et la seconde base en association avec le nom et l'image biométrique respectivement.

Pour assurer une sécurité plus importante, les images biométriques sont généralement elles-mêmes chiffrées lors du stockage dans la seconde base.

Toutefois, les images biométriques chiffrées restent accessibles dans la seconde base et peuvent faire l'objet d'une attaque.

L'invention a pour but de proposer un dispositif et un procédé de stockage permettant un stockage rapide des images biométriques et un accès simple à ces images, tout en permettant un niveau d'anonymat et de sécurité élevé.

A cet effet, l'invention a pour objet un procédé de stockage sécurisé de données biométriques du type précité, caractérisé en ce que :
- l'étape de formation et de sauvegarde du lien comprend :
   o la fragmentation de l'image biométrique en un ensemble de blocs indexés,
   o la création d'un index des blocs propres à permettre la reconstitution de l'image à partir de la connaissance des blocs et de l'index,
   o la création d'un lien entre le nom de l'individu et l'index,
   o la sauvegarde du lien entre le nom de l'individu et l'index, et
- la sauvegarde, dans une deuxième base de l'image biométrique comprend la sauvegarde des différents blocs indexés dans la deuxième base.

Suivant des modes particuliers de mise en oeuvre, le procédé comporte l'une ou plusieurs des caractéristiques suivantes :
- la fragmentation de l'image biométrique en un ensemble de blocs indexés comprend une étape de déduplication,
- la sauvegarde du lien entre nom de l'individu et l'index est effectuée dans une troisième base distincte des première et deuxième bases,
- un identifiant (Id) est défini pour assurer un lien entre chaque nom et chaque index, lequel identifiant (Id) est sauvegardé dans le première base en association avec le nom et dans la troisième base en association avec l'index, et
- l'index n'est pas sauvegardé dans la deuxième base de données avec les blocs de l'image biométrique.

L'invention a également pour objet un procédé de lecture sécurisé de données biométriques comprenant au moins une image biométrique et le nom de l'individu associé à l'image biométrique, le procédé comportant :
- la lecture d'un lien entre le nom de l'individu et l'image biométrique,
- la lecture, dans une première base du nom de l'individu
- la lecture, dans une deuxième base de l'image biométrique,
caractérisé en ce que :
- l'étape de lecture du lien comprend :
   o la lecture, à partir du nom de l'individu, d'un index de blocs propres à permettre la reconstitution de l'image à partir de la connaissance des blocs et de l'index,
   o la lecture de blocs indexés de l'image biométrique dans la deuxième base,
   o la reconstitution de l'image biométrique à partir des blocs et de l'index.

L'invention a enfin pour objet un dispositif de stockage sécurisé de données biométriques comprenant au moins une image biométrique et le nom de l'individu associé à l'image biométrique, le dispositif comportant :
- des moyens de formation et de sauvegarde d'un lien entre le nom de l'individu et l'image biométrique,
- une première base de sauvegarde du nom de l'individu, et
- une deuxième base de sauvegarde de l'image biométrique,
caractérisé en ce que :
- les moyens de formation et de sauvegarde du lien comprennent :
   o des moyens de fragmentation de l'image biométrique en un ensemble de blocs indexés,
   o des moyens de création d'un index des blocs propres à permettre la reconstitution de l'image à partir de la connaissance des blocs et de l'index,
   o des moyens de création d'un lien entre le nom de l'individu et l'index,
   o des moyens de sauvegarde du lien entre le nom de l'individu et l'index
- la deuxième base comprend la sauvegarde des différents blocs indexés.

Suivant des modes particuliers de réalisation, le dispositif comporte l'une ou plusieurs des caractéristiques suivantes :
- les moyens de fragmentation de l'image biométrique en un ensemble de blocs indexés comprennent des moyens de déduplication,
- il comporte une troisième base distincte des première et deuxième bases pour la sauvegarde (58) du lien entre nom de l'individu et l'index, et
- la deuxième base de données contenant les blocs de l'image biométrique ne contient pas l'index.

L'invention sera mieux comprise à la lecture de la description qui va suivre, donnée uniquement à titre d'exemple et faite en se référant aux dessins sur lesquels :
- la figure 1 est une vue schématique d'une installation de stockage ;
- la figure 2 est un diagramme illustrant les flux de données entre les différents équipements pour l'enregistrement d'un individu ;
- la figure 3 est un organigramme schématisant l'étape de déduplication d'une image biométrique ; et
- la figure 4 est une vue identique à celle de la figure 2 lors de la récupération d'une image biométrique d'un individu.

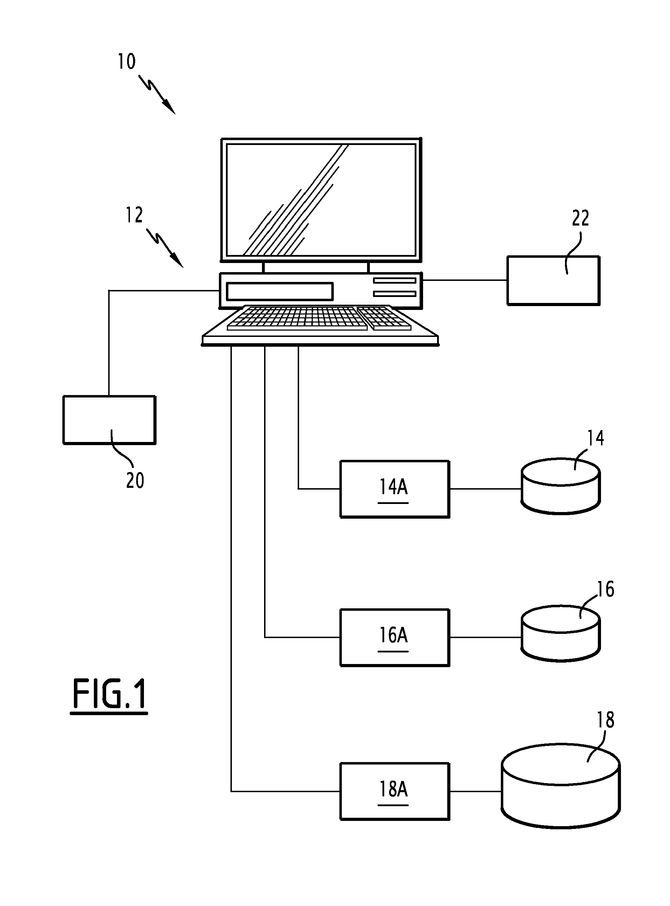

Sur la figure 1 est représenté un dispositif de stockage sécurisé 10 de données biométriques. Celui-ci comporte une unité de traitement d'informations 12, tel qu'un terminal d'un réseau informatique relié à trois bases de données distinctes 14, 16, 18, au travers de trois serveurs de base de données correspondants notés respectivement 14A, 16A et 18A. L'unité 12 est en outre reliée à une interface 20 d'entrée d'images biométriques et à une interface 22 de restitution d'images biométriques.

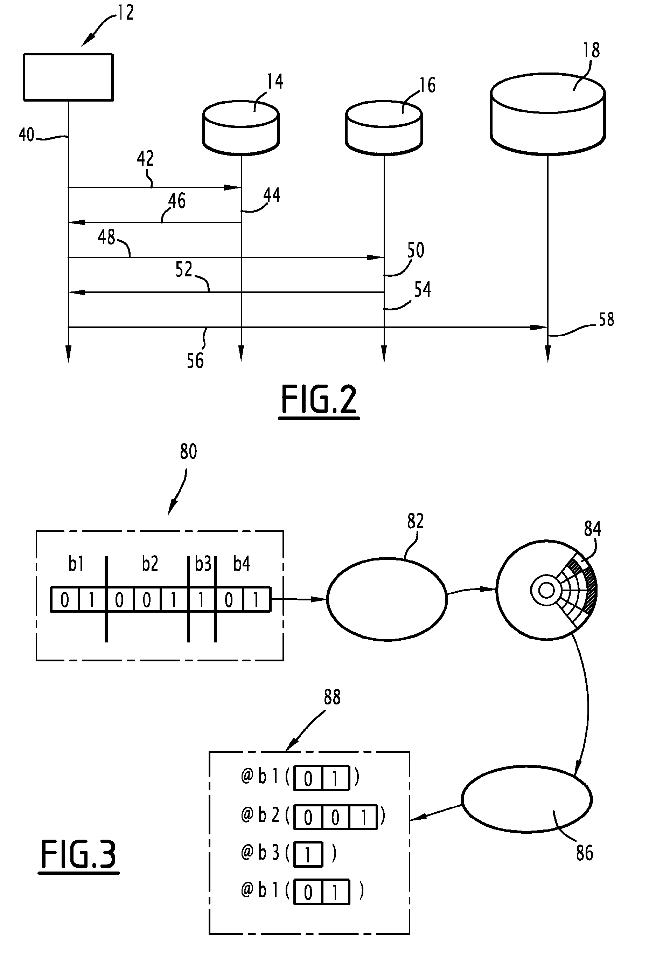

Plus précisément, l'unité de traitement d'informations 12 et les trois serveurs 14A, 16A et 18A sont propres à assurer la gestion des bases de données 14, 16 et 18 et sont équipés d'un logiciel propre à mettre en oeuvre les étapes de stockage et de lecture telles qu'elles seront décrites en regard des figures 2 à 4.

En outre, l'unité 12 comporte une interface logicielle pour l'entrée d'images biométriques ainsi que leurs associations à des noms d'individus concernés par ces images biométriques.

Les trois bases de données 14, 16, 18 sont indépendantes et sont commandées chacune par un serveur propre. Elles sont avantageusement disposées en des lieux distincts pour éviter leur accès simultané.

La première base 14 appelée « base de noms » renferme des couples (Nom, Id) constitués du nom de l'individu noté Nom concerné par une image biométrique et d'un identifiant unique noté Id de ce Nom.

La seconde base 16 désignée par « base d'images » renferme seulement les images biométriques dédupliquées, sans que les index de déduplication notés Index ne soient conservés dans cette base.

La troisième base 18, désignée par « base d'index » renferme des couples (Id, Index) constitués de l'identifiant Id associé au Nom d'un individu et de l'index noté Index correspondant aux images biométriques dédupliquées de cet individu.

L'interface 20 de recueil des images biométriques est formée par exemple d'un lecteur de clé USB, d'un modem, ou de toute autre interface de communication avec l'unité de traitement 12.

De même, l'interface de restitution 22 est formée de tout moyen de communication avec un dispositif auxiliaire, tel qu'un dispositif d'identification de l'individu utilisant la reconnaissance d'image biométrique prise sur cet individu.

Les étapes mises en oeuvre par le logiciel vont maintenant être décrites en regard des figures 2 à 4.

Pour la création d'un enregistrement dans les bases et comme illustré sur la figure 2, le nom de l'individu est d'abord saisi depuis l'unité de traitement 12, puis ce nom est communiqué par le flux 42 à la base de noms 14. Un index unique Id est attribué à l'étape 44 par tout algorithme connu adapté dans le serveur 14B gérant la base de noms. Cet identifiant unique est stocké en association dans la base de noms 14 sous la forme d'un couple (Nom, Id).

L'identifiant Id est transmis par le flux 46 à l'unité de traitement 12.

L'image biométrique de l'individu est ensuite recueillie depuis l'interface 20 et transmise par le flux 48 à la base d'images 16.

A l'étape 50, l'image est dédupliquée dans le serveur 16A par mise en oeuvre d'un algorithme de déduplication tel que décrit en regard de la figure 3 ou tout autre algorithme assurant une fragmentation de l'image en différents fragments ou blocs indexés et la création d'un index permettant la recomposition de l'image à partir de la connaissance des fragments et de l'index.

L'index unique de déduplication calculé à l'étape 50 est transmis par le flux 52 à l'unité de traitement 12, et est supprimé de la base 16 et du serveur 16A à l'étape 54 après avoir eu la confirmation de sa réception par l'unité 12. Ainsi, seuls les fragments de l'image dédupliquée sont sauvegardés dans la base 16, sans qu'aucune information permettant la reconstitution de l'image ne soit conservée dans la base 16 ou le serveur 16A.

L'unité 12 assure alors la transmission par un flux 56 du couple formé de l'identifiant Id reçu dans le flux 46 et de l'Index de déduplication reçu dans le flux 52. Le couple (Id, index) est stocké à l'étape 58 dans la base d'index 18.

### La déduplication s'effectue par exemple par un algorithme mis en oeuvre par IBM au sein de son « System Storage TS7650G ProtecTIER Deduplication Gateway ».

Comme connu en soi et comme illustrée sur la figure 3, la déduplication comporte d'abord une étape 80 de segmentation de l'image biométrique en blocs ou fragments successifs notés b1 à b4 de longueurs égales ou non.

A l'étape 82, les blocs b1 à b2 sont signés électroniquement par tout moyen adapté et les blocs au contenu identiques sont identifiés. A l'étape 84, chacun des blocs de même contenu est stocké une unique fois sur un support physique de stockage de données adapté, tel qu'un disque dur. Les positions ou adresses de stockage des blocs sont identifiés et rapprochés pour constituer à l'étape 86 un index obtenu par exemple par concaténation des adresses des blocs. Ainsi, dans l'exemple considéré, le bloc b4 étant de contenu identique à celui du bloc b1, l'Index est constitué comme illustré dans le rectangle noté 88 par @b1, @b2, @b3, @b1 où, @bi est l'adresse du bloc i sur le support de stockage de données. Dans cet exemple, le dernier bloc b4 est désigné par l'adresse du bloc b1.

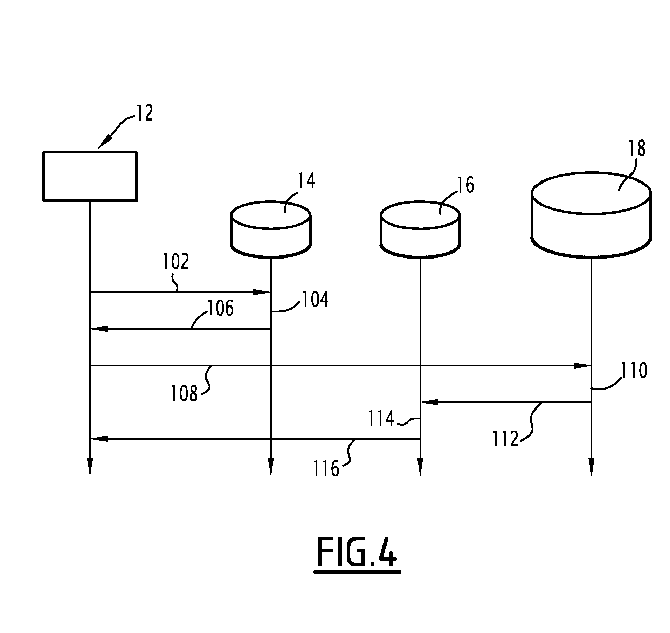

Pour la récupération d'une image biométrique et comme illustré sur la figure 4, le Nom de l'individu est saisi dans l'unité de traitement 12 ou transmis à celle-ci par tout moyen adapté et est transmis par le flux 102 à la base de noms 14. L'identifiant Id associé au nom est retrouvé à l'étape 104 par le serveur 14A et est transmis par le flux 106 vers l'unité de traitement 12.

Une demande de l'image biométrique correspondant à cet identifiant unique Id est transmise par le flux 108 à la base d'index 18. A partir de l'identifiant unique Id, l'index de déduplication est extrait de la base 18 à l'étape 110. Cet index de déduplication est transmis par le flux 112 à la base d'images. A partir de cet index, l'image est lue par reconstitution des différents blocs stockés dans la base correspondant aux adresses contenues dans l'index à l'étape 114 puis l'image est transmise par le flux 116 à l'unité de traitement 12 qui la restitue au travers de l'interface 22.

On comprend qu'avec un tel mécanisme, l'étape de déduplication est utilisée à la fois pour optimiser le stockage de données et pour assurer grâce à l'index créé lors de la déduplication un lien entre l'identifiant et l'image dédupliquée. L'absence de stockage de l'index de déduplication dans la base 16, permet d'éviter tout accès à une image biométrique par un individu ayant accès seulement à la base 16.

La reconstitution du lien entre le nom d'un individu et l'image biométrique associée n'est possible que sous la condition de disposer d'un accès aux trois bases de sorte que la sécurité se trouve accrue.

## Revendications

1. Procédé de stockage sécurisé de données biométriques comprenant au moins une image biométrique et une donnée permettant d'identifier un individu appelée nom associée à l'image biométrique, le procédé comportant :
- la formation et la sauvegarde d'un lien entre le nom de l'individu et l'image biométrique,
- la sauvegarde, dans une première base (14) du nom de l'individu,
- la sauvegarde, dans une deuxième base (16) de l'image biométrique, l'étape de formation et de sauvegarde du lien comprenant :
o la fragmentation (50) de l'image biométrique en un ensemble de blocs indexés,
o la création (50) d'un index des blocs propres à permettre la reconstitution de l'image à partir de la connaissance des blocs et de l'index,
o la création (56) d'un lien entre le nom de l'individu et l'index,
o la sauvegarde (58) du lien entre le nom de l'individu et l'index,
l'étape de sauvegarde, dans une deuxième base (16) de l'image biométrique comprenant la sauvegarde (50) des différents blocs indexés dans la deuxième base (16),
**caractérisé en ce que** la sauvegarde (58) du lien entre nom de l'individu et l'index est effectuée dans une troisième base (18) distincte des première et deuxième bases (14, 16).

2. Procédé de stockage sécurisé de données biométriques selon la revendication 1, **caractérisé en ce que** la fragmentation (50) de l'image biométrique en un ensemble de blocs indexés comprend une étape de déduplication.

3. Procédé de stockage sécurisé de données biométriques selon la revendication 1 ou 2, **caractérisé en ce qu'**un identifiant (Id) est défini pour assurer un lien entre chaque nom et chaque index, lequel identifiant (Id) est sauvegardé dans le première base (12) en association avec le nom et dans la troisième base (18) en association avec l'index.

4. Procédé de stockage sécurisé de données biométriques selon l'une quelconque des revendications précédentes, **caractérisé en ce que** l'index n'est pas sauvegardé dans la deuxième base de données (16) avec les blocs de l'image biométrique.

5. Procédé de lecture sécurisé de données biométriques comprenant au moins une image biométrique et le nom de l'individu associé à l'image biométrique, le procédé comportant :
- la lecture d'un lien entre le nom de l'individu et l'image biométrique,
- la lecture, dans une première base (14) du nom de l'individu
- la lecture, dans une deuxième base (16) de l'image biométrique, l'étape de lecture du lien comprenant :
o la lecture (110), à partir du nom de l'individu, d'un index de blocs propres à permettre la reconstitution de l'image à partir de la connaissance des blocs et de l'index,
o la lecture (114) de blocs indexés de l'image biométrique dans la deuxième base (16),
o la reconstitution (114) de l'image biométrique à partir des blocs et de l'index,
**caractérisé en ce que** la lecture (110) du lien entre nom de l'individu et l'index est effectuée à partir d'une troisième base (18) distincte des première et deuxième bases (14, 16).

6. Dispositif de stockage sécurisé de données biométriques comprenant au moins une image biométrique et le nom de l'individu associé à l'image biométrique, le dispositif comportant :
- des moyens de formation et de sauvegarde d'un lien entre le nom de l'individu et l'image biométrique,
- une première base (14) de sauvegarde du nom de l'individu
- une deuxième base (16) de sauvegarde de l'image biométrique, les moyens de formation et de sauvegarde du lien comprenant :
o des moyens de fragmentation (50) de l'image biométrique en un ensemble de blocs indexés,
o des moyens de création (50) d'un index des blocs propres à permettre la reconstitution de l'image à partir de la connaissance des blocs et de l'index,
o des moyens de création (56) d'un lien entre le nom de l'individu et l'index,
o des moyens de sauvegarde (58) du lien entre le nom de l'individu et l'index,
la deuxième base (16) comprenant la sauvegarde des différents blocs indexés,
**caractérisé en ce qu'**il comporte une troisième base (18) distincte des première et deuxième bases (14, 16) pour la sauvegarde (58) du lien entre nom de l'individu et l'index.

7. Dispositif de stockage sécurisé de données biométriques selon la revendication 6, **caractérisé en ce que** les moyens de fragmentation (50) de l'image biométrique en un ensemble de blocs indexés comprennent des moyens de déduplication.

8. Dispositif de stockage sécurisé de données biométriques selon la revendication 6 ou 7, caractérisé en ce la deuxième base de données (16) contenant les blocs de l'image biométrique ne contient pas l'index.
